(19) Europäisches Patentamt
European Patent Office
Office européen des brevets

(11) EP 1 061 095 B1

(12) EUROPÄISCHE PATENTSCHRIFT

(45) Veröffentlichungstag und Bekanntmachung des Hinweises auf die Patenterteilung:
**18.01.2006 Patentblatt 2006/03**

(51) Int Cl.:
***C08J 9/00*** *(2006.01)* *C08L 75/04* *(2006.01)*

(21) Anmeldenummer: **00110327.4**

(22) Anmeldetag: **13.05.2000**

(54) **Verfahren zur Herstellung von flammwidrigen Polyurethanweichschäumen**

Process for producing flame retardant soft polyurethane foams

Procédé de préparation de mousses souples et ignifuges de polyuréthane

(84) Benannte Vertragsstaaten:
**AT BE CH DE ES FR GB IT LI NL**

(30) Priorität: **16.06.1999 DE 19927548**

(43) Veröffentlichungstag der Anmeldung:
**20.12.2000 Patentblatt 2000/51**

(73) Patentinhaber: **Clariant GmbH**
**65929 Frankfurt am Main (DE)**

(72) Erfinder:
- **Eilbracht, Christian, Dr.**
  **44627 Herne (DE)**
- **Sicken, Martin, Dr.**
  **51149 Köln (DE)**

(56) Entgegenhaltungen:
**GB-A- 1 094 489**

- **PATENT ABSTRACTS OF JAPAN vol. 001, no. 064 (C-017), 22. Juni 1977 (1977-06-22) & JP 52 027721 A (NISSAN CHEM IND LTD), 2. März 1977 (1977-03-02)**
- **CHEMICAL ABSTRACTS, vol. 72, no. 13, 30. März 1970 (1970-03-30) Columbus, Ohio, US; abstract no. 67047, TUZHIKOV, O. I. ET AL: "Interaction of methylphosphonic acid with.alpha.-oxides" XP002148337 & KHIM. KHIM. TEKHNOL. (1968), 42-6. EDITOR(S): KHARDIN, A. P., VOLGOGRAD, USSR. , 1968,**
- **CHEMICAL ABSTRACTS, vol. 105, no. 12, 22. September 1986 (1986-09-22) Columbus, Ohio, US; abstract no. 98439, VILENSKII, V. A. ET AL: "Study of phosphorus-containing poly(urethane semicarbazides) prepared fro prepolymer mixtures" XP002148338 & KOMPOZ. POLIM. MATER. (1986), 28, 45-8 , 1986,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 061 095 B1

Printed by Jouve, 75001 PARIS (FR)

**Beschreibung**

Die Erfindung betrifft ein Verfahren zur Herstellung von flammwidrigen Polyurethanweichschäumen mit geringer Kernverfärbungstenzenz sowie die Verwendung von halogenfreien Hydroxyalkylphosphonaten zur Herstellung von flammwidrigen Polyurethanweichschäumen mit geringer Kernverfärbungstendenz. Die Erfindung betrifft schließlich auch einen flammwidrigen Polyurethanweichschaum mit geringer Kernverfärbungstendenz.

Polyurethanschaumstoffe werden in vielen Bereichen, wie Möbel, Matratzen, Transport, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethanschaumstoffe in der Regel mit Flammschutzmitteln ausgerüstet werden. Hierzu sind eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z.B. Melamin, Ammoniumpolyphosphat und Ammoniumsulfat dosiertechnische Probleme auf, die vielfach Modifikationen der Verschäumanlagen, d.h. aufwendige Umbauten und Anpassungen notwendig machen. Ein Großteil der eingesetzen flüssigen Flammschutzmittel, wie beispielsweise Tris(2-chlorethyl)-phosphat, Tris(2-chlorisopropyl)phosphat und Tetrakis(2-chlorethyl)ethylendiphosphat sind durch eine deutliche Migrationsneigung gekennzeichnet, die die Verwendbarkeit in offenzelligen Polyurethanweichschaumsystemen für die Automobil-Innenausstattung aufgrund der Anforderungen an die kondensierbaren Emissionen (Fogging) weitgehend einschränken.

Unter Fogging versteht man die Kondensation von verdampften flüchtigen Bestandteilen aus der Kraftfahrzeug-Innenausstattung an Glasscheiben, insbesondere an der Windschutzscheibe. Diese Erscheinung kann nach DIN 75201 quantitativ beurteilt werden.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittelsysteme bevorzugt. Auch aus anwendungstechnischen Gründen können halogenfreie Flammschutzmittel von besonderem Interesse sein. So beobachtet man z.B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstoffolie mit Hilfe einer Flamme angeschmolzen und in unmittelbarem Anschluß daran mit einer Textilbahn verpreßt wird.

Vor dem Hintergrund des Trends zur Berücksichtigung von gasförmigen Emissionen (Volatile Organic Compounds = VOC) ergeben sich zudem wachsende Anforderungen an die Migrationsstabilität von Flammschutzmitteln, die auch eine Verwendung additiver höhermolekularer Flammschutzmittel fraglich erscheinen lassen, so daß nach alternativen Lösungen gesucht werden muß.

Die bisher bekannten flüssigen halogenfreien Flammschutzmittelsysteme wie z.B. Dimethyl-methanphosphonat oder verschiedene Alkyl- und Arylphosphate genügen den oben genannten Anforderungen an die Migrationsstabilität nur unzureichend.

Lösungen im Sinne hoher Migrationsstabilität bieten hier aromatische Bisphosphate, wie sie in der JP 06306277 beschrieben sind, und hydroxylgruppentragende oligomere Phosphorsäureester (DE-OS 43 42 972). Diese zeigen nur sehr geringe Fogging-Beiträge, allerdings weisen sie jedoch ein signifikantes Kernverfärbungsproblem bei der Herstellung von Polyurethanschaumstoffen auf, welches nur zum Teil mit Hilfe von Antikernverfärbungsmitteln, z.B. solche auf Hydrochinonbasis (US-A 4,045,378) gemindert werden kann.

Unter Kernverfärbung versteht man die durch Thermooxidation enstehende Braunfärbung von Polyurethanschäumen während der industriellen Produktion. Bei Etherblockschäumen entsteht diese Braunfärbung im Blockinneren u. a. wenn es durch den Gasaustausch von Kohlendioxid durch die vordringende Luft zu Oxidationsreaktionen mit Restisocyanatgruppen oder Ethergruppierungen kommt. Die so entstehende Kernverfärbung (auch Scorching genannt) kann sich bei Verwendung gewisser Additive verstärken. Dabei kann sich die Temperatur im Blockinneren so stark erhöhen, daß es bei Etherweichschäumen zu einer Selbstentzündung kommen kann.

Bei einem geringen Grad der Kernverfärbung kommt es nur zu einer leichten Gelbfärbung des Schaumstoffes ohne signifikante Beeinflussung der mechanischen Eigenschaften. Mit zunehmender Gelb-Braunfärbung beobachtet man hingegen eine beginnende Zersetzung des Polyurethanschaums unter Verschlechterung der mechanischen Eigenschaften.

Die bisherigen Verfahren zur Herstellung von Polyurethanschäumen weisen den Nachteil auf, daß beim Einsatz von flüssigen halogenfreien Flammschutzmitteln häufig die zuvor beschriebene Kernverfärbung während des Herstellprozesses auftritt, so daß die Herstellung von Polyurethanschäumen niedriger Rohdichte aufgrund des erhöhten Brandrisikos ausgeschlossen ist, die Produktion weißer Schaumqualitäten nicht gelingt und hohe Flammschutzmittelmengen

nicht verarbeitbar sind.

Es ist Aufgabe der vorliegenden Erfindung, ein Verfahren zur Herstellung von halogenfrei flammgeschützten Polyurethanschäumen mit hoher oxidativer thermischer Beständigkeit bei der Verschäumung zur Verfügung zu stellen. Das Verfahren soll dabei auf Ester- und Etherweichschäume als auch auf Hartschäumen anwendbar sein und die Produktion von Polyurethanschaumstoffen mit niedrigen Fogging-Werten ermöglichen. Gleichzeitig soll das Verfahren zu Polyurethanschäumen mit einer hohen Alterungsbeständigkeit des Flammschutz führen, d.h. daß nach entsprechender Lagerungsdauer, auch bei erhöhter Temperatur, der Polyurethanschaum immer noch einen wirksamen Flammschutz aufweist.

Die vorliegende Aufgabe wird gelöst durch ein Verfahren zur Herstellung von flammwidrigen Polyurethanweichschäumen mit geringer Kernverfärbungstendenz durch Umsetzung von organischen Polyisocyanaten mit Verbindungen mit mindestens 2 gegenüber Isocyanaten reaktionsfähigen Wasserstoffatomen und üblichen Treibmitteln, Stabilisatoren, Aktivatoren und/oder weiteren üblichen Hilfs- und Zusatzstoffen, dadurch gekennzeichnet, daß als halogenfreie Flammschutzmittel und als Kernverfärbungsinhibitoren Hydroxyalkylphosphonate der allgemeinen Formel I,

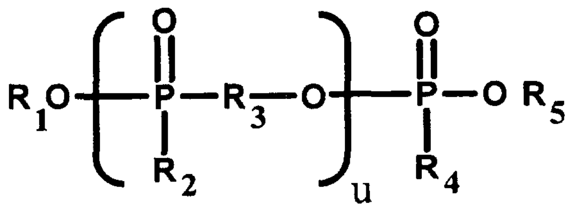

(I)

in der

u eine Kettenlänge von 1

$R_1$, $R_5$ gleich oder verschieden sind und einen hydroxylgruppenhaltigen Rest der allgemeinen Formel II

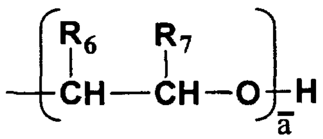

(II)

$R_2$ , $R_4$ gleich oder verschieden sind und eine Alkyl-, Aryl- oder Alkylarylgruppe mit 1 bis 12 C-Atomen

$R_3$ einen Rest der allgemeinen Formel III

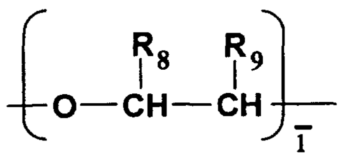

(III)

$\bar{a}$ eine durchschnittliche Kettenlänge von 0 bis 4

$\bar{i}$ eine durchschnittliche Kettenlänge von 0 bis 4

$R_6$, $R_7$, $R_8$, $R_9$ gleich oder verschieden sind und unabhängig voneinander für H oder eine Alkylgruppe mit 1 bis 6 C-Atomen stehen, bedeuten, eingesetzt werden.

Besonders bevorzugt bedeuten

$\bar{a}$ a eine durchschnittliche Kettenlänge von 1 bis 2

$\bar{i}$ eine durchschnittliche Kettenlänge von 1 bis 2

$R_2$, $R_4$ sind gleich oder verschieden und stehen unabhängig voneinander für eine Alkylgruppe mit 1 bis 5 C-Atomen

$R_6$ , $R_7$, $R_8$ , $R_9$ sind gleich oder verschieden und stehen unabhängig voneinander für H oder eine Alkylgruppe mit 1 oder 2 C-Atomen.

In den Formeln der vorgenannten, erfindungsgemäß eingesetzten Hydroxyalkylphosphonate geben Zahlen wie u (für Formel I) an, wie oft eine bestimmte Gruppe im Molekül enthalten ist. Dabei sind auch Mischungen verschiedener Hydroxyalkylphosphonate möglich, d.h. daß die Werte für u verschieden groß sein können und man schließlich einen Mittelwert $\bar{u}$ erhält.

Bevorzugt handelt es sich bei den Hydroxyalkylphosphonaten um Diethylen-glykol- bis-(hydroxyalkoxy)methanphosphonat und/oder Ethylenglykol-bis-(hydroxyalkoxy)-ethanphosphonat.

Bevorzugt handelt es sich bei den Hydroxyalkylphosphonaten der allgemeinen Formel I um bei Verarbeitungstemperatur flüssige Verbindungen. Unter der Verarbeitungstemperatur wird hierbei die Temperatur verstanden, bei der die Polyurethanrohstoffe den Dosier- und Mischaggregaten der Verschäumanlagen zugeführt werden. In der Regel werden hier in Anhängigkeit der Viskositäten der Komponenten und Auslegung der Dosieraggregate Temperaturen zwischen 20 und 80 °C gewählt.

Bevorzugt handelt es sich bei den Hydroxyalkylphosphonaten der allgemeinen Formel I um gegenüber Isocanaten reaktive Verbindungen.

Bevorzugt zeigen die Hydroxyalkylphosphonate der allgemeinen Formel I eine hohe Migrationsstabilität.

Bevorzugt werden die Hydroxyalkylphosphonate der allgemeinen Formel I in einer Menge von 0,01 bis 50 Teilen, bezogen auf den resultierenden Polyurethanweichschaum, eingesetzt.

Besonders bevorzugt werden die Hydroxyalkylphosphonate der allgemeinen Formel I in einer Menge von 0,5 bis 10 Teilen, bezogen auf den resultierenden Polyurethanweichschaum, eingesetzt.

Grundsätzlich ist es aber auch möglich, daß die vorgenannten Hydroxyalkylphosphonate die sonst zur Herstellung üblichen Polyole vollständig substituieren.

Bevorzugt werden weitere an sich bekannte Kernverfärbungsinhibitoren und/oder Flammschutzmittel eingesetzt.

Diese vorgenannte Aufgabe wird ebenfalls gelöst durch die Verwendung von halogenfreien Hydroxyalkylphosphonaten der allgemeinen Formel I.

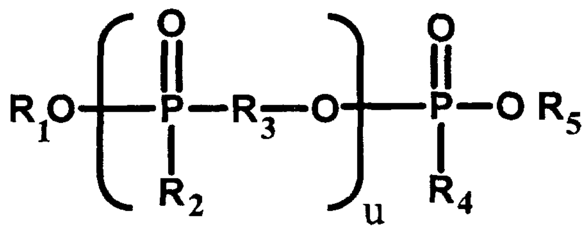

(I)

in der

u eine Kettenlänge von 1

$R_1$ , $R_5$ gleich oder verschieden sind und einen hydroxylgruppenhaltigen Rest der allgemeinen Formel II

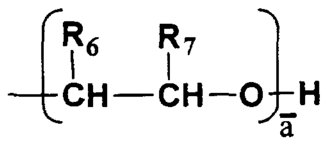

(II)

$R_2$, $R_4$ gleich oder verschieden sind und eine Alkyl-, Aryl- oder Alkylarylgruppe mit 1 bis 12 C-Atomen

$R_3$ einen Rest der allgemeinen Formel III

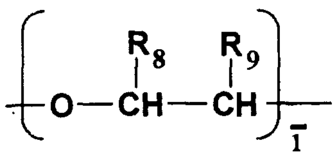

(III)

$\bar{a}$ eine durchschnittliche Kettenlänge von 0 bis 4

$\bar{l}$ eine durchschnittliche Kettenlänge von 0 bis 4

$R_6$, $R_7$, $R_8$, $R_9$ gleich oder verschieden sind und unabhängig voneinander für H oder eine Alkylgruppe mit 1 bis 6 C-Atomen stehen, bedeuten, als halogenfreie Flammschutzmittel zur Herstellung von flammwidrigen Polyurethanweichschäumen mit geringer Kernverfärbungstendenz

Besonders bevorzugt bedeuten

$\bar{a}$ eine durchschnittliche Kettenlänge von 1 bis 2

$\bar{l}$ eine durchschnittliche Kettenlänge von 1 bis 2

$R_2$, $R_4$ sind gleich oder verschieden und stehen unabhängig voneinander für eine Alkylgruppe mit 1 bis 5 C-Atomen

$R_6$, $R_7$, $R_8$, $R_9$ sind gleich oder verschieden und stehen unabhängig voneinander für H oder eine Alkylengruppe mit 1 oder 2 C-Atomen.

Bevorzugt handelt es sich bei den Hydroxyalkylphosphonaten um Diethylenglykol- bis-(hydroxyalkoxy)methanphosphonat und/oder Ethylenglykol-bis-(hydroxyalkoxy)-ethanphosphonat.

Die Herstellung von Schaumstoffen auf Isocyanatbasis ist an sich bekannt und z.B. in DE-OS 16 94 142, DE-OS 16 94 215 und DE-OS 17 20 768 sowie im Kunststoff-Handbuch Band VII, Polyurethane, herausgegeben von Vieweg und Höchtlen, Carl Hanser Verlag München, 1966, sowie in der Neuauflage dieses Buches, herausgegeben von G. Oertel, Carl Hanser Verlag München, Wien 1983 bzw. 1993, beschrieben.
Es handelt sich dabei vorwiegend um Urethan- und/oder Isocyanurat- und/oder Allophanat- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis werden eingesetzt:

Als Ausgangskomponenten: Aliphatische, cycloaliphatische, araliphatische, aromatische und heterocyclische Polyisocyanate (z.B. W. Siefken in Justus Liebigs Annalen der Chemie, 562, S. 75-136), beispielsweise solche der Formel $Q(NCO)_n$, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten, z.B. solche Polyisocyanate, wie sie in der DE-OS 28 32 253, Seiten 10 bis 11, beschrieben werden. Besonders bevorzugt werden in der Regel die technisch leicht zugänglichen Polyisocyanate, die sich vom 2,4- und/oder 2,6- Toluylendiisocyanat bzw. von 4,4'- und/oder 2,4'-Diphenylmethandiisocyanat ableiten.

Ausgangskomponenten sind ferner Verbindungen mit mindestens zwei gegenüber Isocyanaten reaktionsfähigen Wasserstoffatomen mit einem Molekulargewicht von 400 bis 10.000 ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 200 bis 6000, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32

253 beschrieben.

Wasser und/oder leicht flüchtige organische Substanzen als Treibmittel, z.B. n-Pentan, i-Pentan, Cyclopentan, halogenhaltige Alkane, wie Trichlormethan, Methylenchlorid oder Chlorfluoralkane, $CO_2$ und andere.

Gegebenenfalls werden Hilfs- und Zusatzmittel mitverwendet wie Katalysatoren der an sich bekannten Art, oberflächenaktive Zusatzstoffe, wie Emulgatoren und Schaumstabilisatoren, Reaktionsverzögerer, z.B. sauer reagierende Stoffe wie Salzsäure oder organische Säurehalogenide, ferner Zellregler der an sich bekannten Art wie Paraffine oder Fettalkohole und Dimethylpolysiloxane sowie Pigmente oder Farbstoffe und weitere Flammschutzmittel der an sich bekannten Art, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Ruß- oder Schlämmkreide (DE-OS 27 32 292).

Eine weitere Übersicht über die zur Herstellung von Polyurethanschaumstoffen verwendeten Roh-, Hilfs- und Zusatzstoffe sowie die Verfahrenstechnik zur Herstellung dieser ist im Kunststoff-Handbuch 7 "Polyurethane" von Dr. Günther Oertel, 3. neu bearb. Aufl. 1993 gegeben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabiliatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl Hanser Verlag, München, 1993, auf den Seiten 104 bis 123 beschrieben.

Durchführung des Verfahrens zur Herstellung von Polyurethanschaumstoffen: Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß in Frage kommen, werden im Kunststoff-Handbuch, Band VI, Carl Hanser Verlag, München, 1993, auf den Seiten 139 bis 192 beschrieben.

Erfindungsgemäß lassen sich auch kalthärtende Schaumstoffe herstellen (GB-PS 11 62 517, DE-OS 21 53 086).

Selbstverständlich können aber auch Schaumstoffe durch Blockverschäumung oder nach dem an sich bekannten Doppeltransportbandverfahren hergestellt werden.

Polyisocyanuratschaumstoffe werden nach den hierfür bekannten Verfahren und Bedingungen hergestellt.

Somit können die erfindungsgemäß flammgeschützten Polyurethan-Kunststoffe als Elastomere durch Gießen, als Hart- oder Weichschäume in kontinuierlicher oder diskontinuierlicher Herstellungsweise oder als geschäumte oder massive Formartikel hergestellt werden.

Bevorzugt sind Weichschaumstoffe, die durch ein Blockverschäumungsverfahren hergestellt werden.

Die nach der Erfindung erhältlichen Produkte finden z.B. folgende Anwendung: Möbelpolsterungen, Textileinlagen, Matratzen, Automobilsitze, Armlehnen und Bauelemente sowie Sitz- und Armaturverkleidungen.

Für die nachfolgenden Beispiele wurden vier unterschiedliche Vertreter der vorgenannten Hydroxyalkylphosphonate nach bekannten Wegen der organische Synthese hergestellt (Houben-Weyl, Band XII/1, Teil 1, S. 423 - 524) und den entsprechenden Ausprüfungen unterzogen. Diese Hydroxyalkylphosphonate werden nachstehend mit F3 und F4 bezeichnet.

F3: Diethylenglykol-bis-(hydroxyalkoxymethanphosphonat)

| | |
|---|---|
| Phosphorgehalt: | 12,7 % (m/m) |
| Säurezahl: | <1mg KOH/g |
| Hydroxylzahl: | 350 mg KOH/g |

F4 Ethylenglykol-bis-(hydroxyalkoxyethanphosphonat)

| | |
|---|---|
| Phosphorgehalt: | 17,5 % (m/m) |
| Säurezahl: | < 1mg KOH/g |
| Hydroxylzahl: | 380 mg KOH/g |

Weiterhin wurden für eine vergleichende Ausprüfung die mit VF1 bis VF5 bezeichneten kommerziell erhältlichen, flüssigen und halogenfreien phosporhaltigen Flammschutzmittel verwendet:

VF1: Dimethyl-methanphosphonat (®Reoflam DMMP, Hersteller: FMC GmbH),
VF2: Diethyl-ethanphosphonat (®Levagard VP AC 4048 DEEP, Hersteller: Bayer AG),
VF3: N,N-Bis-(2-Hydroxyethyl)aminomethanphosphonsäure-diethylester (®Levagard 4090 N, Hersteller: Bayer AG),
VF4: Resorcinol-bis-(diphenylphosphat) (®Fyrolflex RDP, Hersteller: Akzo Nobel)
VF5: hydroxyalkylestergruppentragender Phosphorsäurepolyester (®Exolit OP 550, Hersteller: Clariant GmbH)

Die Erfindung wird durch die nachstehenden Beispiele erläutert:

Die oben beschriebenen Flammschutzmittel F3 und F4 wurden in Polyurethanweichschäumen mit einem NCO-Index von 105 folgender Formulierung eingearbeitet. Der NCO-Index ist eine Kennzahl, die das prozentuale Verhältnis der eingesetzten Isocyanatmenge zur stöchiometrischen, d.h. berechneten Isocyanatmenge bei der Umsetzung je einer isocyanataktiven Gruppe mit einer Isocyanatgruppe beschreibt.

Für die Versuche wurden die folgenden Bestandteile eingesetzt:

| | |
|---|---|
| Polyetherpolyol | ®Caradol SC 46-02, Shell Chemie, trifuktionelles Polyether-Polyol mit einer Hydroxylzahl von 48 mg KOH/g |
| Katalysatoren | ®Niax A-1, OSi Specialities Inc., Mischung von 70 % Bis-(2-Dimethylaminomethyl)ether und 30 % Dipropylenglykol ®Dabco 33-LV, Air Products, eine Mischung von 67 % Dipropylenglycol und 33 % Diazabicyclo(2,2,2)octan |
| Zinn(II)ethylhexanoat | ®Desmorapid SO, Rhein Chemie Rheinau GmbH, |
| Stabilisator | ®Tegastab B3460, Th. Goldschmidt AG, polyethermodifiziertes Polysiloxan |
| Toluylen-diisocyanat | ®Desmodur T80, Bayer AG, eine Mischung aus 80 % 2,4-Toluylendiisocyanat und 20 % 2,6-Toluylen-diisocyanat |

Tabelle 1: Polyurethanweichschaumformulierung auf Basis der Flammschutzmittel F3 und F4

| Beispiel | 1 | 2 | 3 | 4 |
|---|---|---|---|---|
| Polyetherpolyol (®Caradol SC 46-02) | 100 Teile | 100 Teile | 100 Teile | 100 Teile |
| Flammschutzmittel F3 | | | 4 Teile | |
| Flammschutzmittel F4 | | | | 4 Teile |
| Wasser | 4 Teile | 4 Teile | 4 Teile | 4 Teile |
| Bis(2-Dimethyaminoethyl)ether/Glykol-Mischung (®Niax A1) | 0,1 Teile | 0,1 Teile | 0,1 Teile | 0,1 Teile |
| Diazabicyclo(2,2,2)octane/Dipropylenglycol (®Dabco 33-LV) | 0,2 Teile | 0,2 Teile | 0,2 Teile | 0,2 Teile |
| Siliconstabilisator (® Tegostab B 3640) | 1,0 Teile | 1,0 Teile | 1,0 Teile | 1,0 Teile |
| Zinn-II-ethylhexanoat (®Desmorapid SO) | 0,13-0,20 Teile | 0,13- 0,20 Teile | 0,13-0,20 Teile | 0,13 - 0,18 Teile |
| Toluylen-diisocyanat (®Desmodur T80) | Index 105 | Index 105 | Index 105 | Index 105 |

Zur Herstellung der Polyurethanweichschäume der Beispiele 1 und 2 wurden alle Komponenten - mit Ausnahme des Toluydendiisocyanates - intensiv vermischt und dieses zuletzt eingearbeitet.

Beispiele 3 bis 7 (Vergleichsbeispiele)

Analog zur Rezeptur und Herstellvorschrift aus Beispiel 1 wurden die flüssigen phosporhaltigen Flammschutzmittel Dimethyl-methanphosphonat (VF1), Diethyl-ethanphosphonat (VF2), N,N-Bis-(2-hydroxyethly)aminomethanphosphonsäurediethylester (VF3), Resorcinol-bis-(diphenylphosphat) (VF4) sowie ein hydroxyalkylestergruppentragender Phosphorsäurepolyester (VF5) verschäumt.

Tabelle 2: Polyurethanweichschaumformulierung auf Basis der Flammschutzmittel VF1 bis VF5

| Beispiel | 5 | 6 | 7 | 8 | 9 |
|---|---|---|---|---|---|
| Polyetherpolyol (®Caradol SC 46-02, Shell) | 100 Teile | 100 Teile | 100 Teile | 100 Teile | 100 Teile |
| Flammschutzmittel VF1 | 4 Teile | | | | |
| Flammschutzmittel VF2 | | 4 Teile | | | |
| Flammschutzmittel VF3 | | | 4 Teile | | |
| Flammschutzmittel VF4 | | | | 4 Teile | |
| Flammschutzmittel VF5 | | | | | 4 Teile |
| Wasser | 4 Teile | 4 Teile | 4 Teile | 4 Teile | 4 Teile |
| Bis(2-Dimethylaminoethyl)ether/ Glykol-Mischung (®Niax A1) | 0,1 Teile | 0,1 Teile | 0,1 Teile | 0,1 Teile | 0,1 Teile |
| Diazabicyclo(2,2,2)octane/ Dipropylenglycol (®Dabco 33-LV) | 0,2 Teile | 0,2 Teile | 0,2 Teile | 0,2 Teile | 0,2 Teile |
| Siliconstabilisator (® Tegostab B 3640) | 1,0 Teile | 1,0 Teile | 1,0 Teile | 1,0 Teile | 1,0 Teile |
| Zinn-II-ethylhexanoat (®Desmorapid SO) | 0,13 - 0,20 Teile | 0,13 - 0,20 Teile | 0,13-0,20 Teile | 0,13 - 0,20 Teile | 0,13 - 0,20 Teile |
| Toluylen-diisocyanat (®Desmodur T80) | Index 105 | Index 105 | Index 105 | Index 105 | Index 105 |

Prüfung der Flammfestigkeit:

Zur Ermittlung der Flammfestigkeit der Polyurethanweichschäume aus Beispiel 1 und Beispiel 2 wurde der FMVSS 302 - Test (Federal Motor Vehicle Safety Standard) vor sowie nach einer Wärmealterung (7 Tage bei 140 °C in Anlehnung an DIN 53357) durchgeführt. Die Ergebnisse sind in Tabelle 3 zusammengefaßt.

Tabelle 3: Brandverhalten nach FMVSS 302

| Beispiel | Flammschutzmittel | Teile auf 100 Teile Polyetherpolyol | FMVSS 302 Klassifizierung | FMVSS 302 Klassifizierung nach Alterung |
|---|---|---|---|---|
| 1 | F3 | 4 | SE | SE |
| 2 | F4 | 4 | SE | SE |
| 3 | VF1 | 4 | SE/B | B |
| 4 | VF2 | 4 | SE/NBR | B |
| 5 | VF3 | 4 | SE/B | SE |
| 6 | VF4 | 4 | B | B |
| 7 | VF5 | 4 | SE | SE |

Terminologie zur Beurteilung des Brandverhaltens:

| | |
|---|---|
| SE | Selbsterlöschend |
| SE/NBR | Selbsterlöschend/keine Brennrate |
| SE/B | Selbsterlöschend/mit Brennrate |

B Brennrate

Es zeigt sich deutlich die hohe Effektivität der erfindungsgemäß verwendeten Flammschutzmittel (F3 und F4). Diese Flammschutzmittel ermöglichen ebenso wie der hydroxylgruppenhaltige Phosphorsäureester VF5 bereits mit 4 Teilen pro 100 Teile Polyetherpolyol eine Einstufung in die Klasse SE. Die hohe Wirksamkeit der Hydroxyalkylphosphonate ist überraschend, da die aufgeführten kommerziell erhältlichen halogenfreien Flammschutzmittel auf Phosphonatbasis (VF1, VF2, VF3) eine deutlich geringere Effektivität aufweisen. Auch das halogenfreie flüssige Flammschutzmittel auf Phosporsäuresterbasis (VF4) führt bei gleicher Einsatzmenge nur zu einer Einstufung in eine niedrigere Brandschutzklasse.

Die hohe Migrationsstabilität der verwendeten Hydroxyalkylphosphonate (F3 und F4) ist ebenfalls aus der Tabelle 3 entnehmbar. Die Schaumproben zeigen ein nahezu unverändertes Brandverhalten nach Wärmealterung. Im Gegensatz hierzu verschlechtert sich das Brandverhalten der Polyurethanweichschäume, die mit niedermolekularen additiven Flammschutzmitteln ausgerüstet sind (VF1, VF2) deutlich.

Prüfung des Fogging-Verhaltens

Die Untersuchung des Fogging-Verhaltens der beanspruchten Flammschutzmittel erfolgte an offenzelligen Polyetherweichschäumen, die analog zu den für die Beispiele 1 bis 7 geltenden Rezepturen mit erhöhter Flammschutzmittelmenge (jeweils 8 Teile) hergestellt wurden.
Die Bestimmung der Fogging-Werte erfolgte gemäß DIN 75201 nach dem Verfahren G. Hierbei wurde ein von der Fa. Haake, Karlsruhe, hergestelltes Prüfgerät eingesetzt, bei dem die bei 20 °C kondensierbaren Bestandteile der bei 100 °C flüchtigen Substanzen des Prüfkörpers gravimetrisch bestimmt werden. Die Ergebnisse sind in Tabelle 4 aufgeführt.

Tabelle 4: Fogging-Verhalten gemäß DIN 75201 Verfahren G

| Beispiel | Flammschutzmittel | Teile pro 100 Teile Polyetherpolyol | Fogging-Wert DIN 75241 |
|---|---|---|---|
| 1A | F3 | 8 | 0,4 mg |
| 2A | F4 | 8 | 0,6 mg |
| 3A | VF1 | 8 | 1,5 mg |
| 4A | VF2 | 8 | 3,8 mg |
| 5A | VF3 | 8 | 0,5 mg |
| 6A | VF4 | 8 | 1,0 mg |
| 7A | VF5 | 8 | 0,5 mg |

Wie aus Tabelle 4 ersichtlich ist, zeichnen sich die verwendeten hydroxylgruppentragenden Phosphonsäureester (F3 und F4) ebenso wie die gleichfalls gegenüber Isocyanaten reaktiven Flammschutzmittel ®Exolit OP 550 (VF5) und ®Levagard 4090 (VF3) durch extrem niedrige Fogging-Werte aus.

Prüfung der thermooxidativen Beständigkeit (Kernverfärbung)

Die thermooxidative Beständigkeit der beanspruchten hydroxylgruppentragenden Phosphonsäureester wurde in Anlehnung an ein in der US PS 4 131 660 beschriebenes Verfahren überprüft. Zunächst wurden dabei die zu untersuchenden Flammschutzmittel entsprechend der Polyetherweichschaumrezeptur der Beispiele 1 bis 9 7 verschäumt und anschließend für 4 Minuten einer Mikrowellenstrahlung mit einer Leistung von 400 W ausgesetzt. Zur Auswertung der Kernverfärbung wurden 2 cm dicke Scheiben aus den Schaumblöcken herausgeschnitten und die beobachtete Gelbfärbung der Schaumproben visuell beurteilt. Abhängig von der Farbtiefe und Ausdehnung des verfärbten Bereiches wurde den Proben ein Kemverfärbungsindex zwischen 0 (keine erkennbare Gelbfärbung) und 6 (großflächige Braunfärbung) zugeordnet.

| Beispiel | Flammschutzmittel | Teile | KV-Index |
|---|---|---|---|
| 1B | F3 | 8 | 1 |
| 2B | F4 | 8 | 1 |
| 3B | VF1 | 8 | 0 |

Tabelle fortgesetzt

| Beispiel | Flammschutzmittel | Teile | KV-Index |
|---|---|---|---|
| 4B | VF2 | 8 | 0 |
| 5B | VF3 | 8 | 3 |
| 6B | VF4 | 8 | 1 |
| 7B | VF5 | 8 | 6 |

Die mit den erfindungsgemäß flammhemmenden Additiven ausgerüsteten Polyurethanschäume (1B und 2B) sind überraschenderweise durch eine hohe thermooxidative Stabilität gekennzeichnet (KV-Index 1), die im Bereich der Alkylphosphonsäureester (VF1, VF2) liegen. Diese geringe Kernverfärbungstendenz ist insofern erstaunlich, da vergleichbare reaktive Flammschutzmittel wie die hydroxyalkylgruppentragende Phosphor- (VF5) bzw. Phosphonsäureester (VF3) drastische Kernverfärbungsprobleme induzieren und somit eine geringere thermooxidative Stabilität als die beanspruchten Hydroxyalkylphosphonate aufweisen.

Die erfindungsgemäß eingesetzten Hydroxyalkylphosphonate stellen hervorragend geeignete halogenfreie flüssige Flammschutzmittel für Polyurethanschäume dar, die sich gleichzeitig durch eine überraschend hohe Effektivität in Polyurethanweichschäumen, eine für reaktive phosphorhaltige Flammschutzmittel erstaunlich niedrige Kernverfärbungstendenz sowie eine hohe Migrationsstabilität auszeichnen.

**Patentansprüche**

1. Verfahren zur Herstellung von flammwidrigen Polyurethanweichschäumen mit geringer Kernverfärbungstendenz durch Umsetzung von organischen Polyisocyanaten mit Verbindungen mit mindestens 2 gegenüber Isocyanaten reaktionsfähigen Wasserstoffatomen und üblichen Treibmitteln, Stabilisatoren, Aktivatoren und/oder weiteren üblichen Hilfs- und Zusatzstoffen, **dadurch gekennzeichnet, daß** als halogenfreie Flammschutzmittel und als Kernverfärbungsinhibitoren Hydroxyalkylphosphonate der allgemeinen Formel (I),

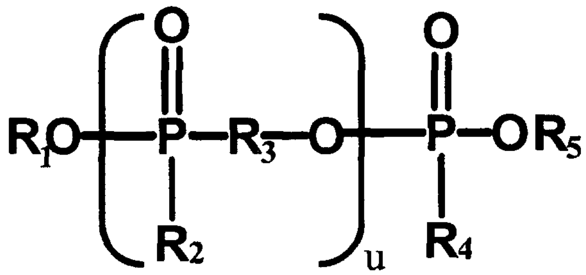

(I)

in der u eine Kettenlänge 1
$R_1$, $R_5$ gleich oder verschieden sind und einen hydroxylgruppenhaltigen Rest der allgemeinen Formel II

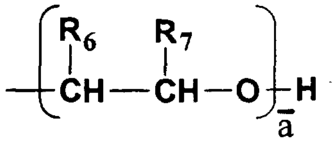

(II)

$R_2$, $R_4$ gleich oder verschieden sind und eine Alkyl-, Aryl- oder Alkylarylgruppe mit 1 bis 12 C-Atomen und $R_3$ einen Rest der allgemeinen Formel III

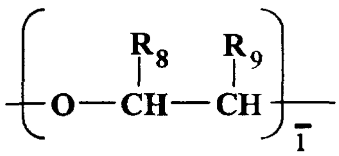

(III)

$\bar{a}$ eine durchschnittliche Kettenlänge von 0 bis 4

$\bar{l}$ eine durchschnittliche Kettenlänge von 0 bis 4 bedeuten und

$R_6$, $R_7$, $R_8$, $R_9$ gleich oder verschieden sind und unabhängig voneinander für H oder eine Alkylgruppe mit 1 bis 6 C-Atomen stehen, eingesetzt werden.

2. Verfahren nach Anspruch 1, **dadurch gekennzeichnet, daß**
u eine Kettenlänge 1

$\bar{a}$ eine durchschnittliche Kettenlänge von 1 bis 2

$\bar{l}$ eine durchschnittliche Kettenlänge von 1 bis 2 bedeuten und

$R_2$ , $R_4$ gleich oder verschieden sind und unabhängig voneinander für eine Alkylgruppe mit 1 bis 5 C-Atomen stehen

$R_6$, $R_7$, $R_8$, $R_9$ gleich oder verschieden sind und unabhängig voneinander für H oder eine Alkylgruppe mit 1 oder 2 C-Atomen stehen.

3. Verfahren nach Anspruch 1 oder 2, **dadurch gekennzeichnet, daß** es sich bei den Hydroxyalkylphosphonaten um Diethylenglykol-bis-(hydroxyalkoxy)methanphosphonat und/oder Ethylenglykol-bis-(hydroxyalkoxy)ethanphosphonat handelt.

4. Verfahren nach einem oder mehreren der Ansprüche 1 bis 3, **dadurch gekennzeichnet, daß** es sich bei den Hydroxyalkylphosphonaten der allgemeinen Formel I um bei Verarbeitungstemperatur flüssige Verbindungen handelt.

5. Verfahren nach einem oder mehreren der Ansprüche 1 bis 4, **dadurch gekennzeichnet, daß** es sich bei den Hydroxyalkylphosphonaten der allgemeinen Formel I um gegenüber Isocyanaten reaktive Verbindungen handelt.

6. Verfahren nach einem oder mehreren der Ansprüche 1 bis 5, **dadurch gekennzeichnet, daß** weitere an sich bekannte Kernverfärbungsinhibitoren und/oder Flammschutzmittel eingesetzt werden.

7. Verfahren nach einem oder mehreren der Ansprüche 1 bis 6, **dadurch gekennzeichnet, daß** die Hydroxyalkylphosphonate der allgemeinen Formel I in einer Menge von 0,01 bis 50 Teilen, bezogen auf den resultierenden Polyurethanweichschaum, eingesetzt werden.

8. Verfahren nach einem oder mehreren der Ansprüche 1 bis 7, **dadurch gekennzeichnet, daß** die Hydroxyalkylphosphonate der allgemeinen Formel I in einer Menge von 0,5 bis 10 Teilen, bezogen auf den resultierenden Polyurethanweichschaum, eingesetzt werden.

9. Verwendung von Hydroxyalkylphosphonaten der allgemeinen Formel I

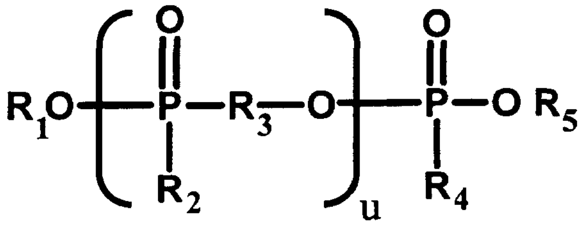

(I)

in der
u eine Kettenlänge 1
$R_1$, $R_5$ gleich oder verschieden sind und einen hydroxylgruppenhaltigen Rest der allgemeinen Formel II

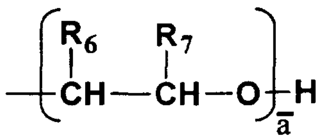

(II)

$R_2$ , $R_4$ gleich oder verschieden sind und eine Alkyl-, Aryl- oder Alkylarylgruppe mit 1 bis 12 C-Atomen
$R_3$ einen Rest der allgemeinen Formel III

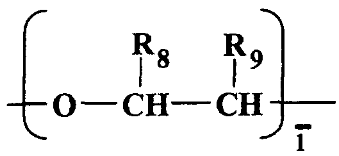

(III)

$\bar{a}$ eine durchschnittliche Kettenlänge von 0 bis 4

$\bar{i}$ eine durchschnittliche Kettenlänge von 0 bis 4

$R_6$ , $R_7$ , $R_8$ , $R_9$ gleich oder verschieden sind und unabhängig voneinander für H oder eine Alkylgruppe mit 1 bis 6 C-Atomen stehen,
bedeuten,
als halogenfreie Flammschutzmittel zur Herstellung von flammwidrigen Polyurethanweichschäumen mit geringer Kernverfärbungstenzdenz.

**10.** Verwendung nach Anspruch 9, **dadurch gekennzeichnet, daß**
u eine Kettenlänge 1

$\bar{a}$ eine durchschnittliche Kettenlänge von 1 bis 2

$\bar{i}$ eine durchschnittliche Kettenlänge von 1 bis 2 bedeuten

$R_2$, $R_4$ gleich oder verschieden sind und unabhängig voneinander für eine Alkylgruppe mit 1 bis 5 C-Atomen stehen
$R_6$ , $R_7$ , $R_8$ , $R_9$ gleich oder verschieden sind und unabhängig voneinander für H oder eine Alkylgruppe mit 1 oder 2 C-Atomen stehen.

**11.** Verwendung nach Anspruch 9 oder 10, **dadurch gekennzeichnet, daß** es sich bei den Hydroxyalkylphosphonaten um Diethylenglykol-bis-(hydroxy-alkoxy)methan-phosphonat und/oder Ethylenglykol-bis-(hydroxyalkoxy)ethan-phosphonat handelt.

## Claims

**1.** A process for the production of flame-resistant flexible polyurethane foams having a low susceptibility to core discoloration by reacting organic polyisocyanates with compounds having at least two isocyanate-reactive hydrogen atoms and conventional blowing agents, stabilizers, activators and/or further conventional auxiliaries and additives, which comprises using hydroxyalkyl phosphonates of the general formula (I) as halogen-free flame retardants and as core discoloration inhibitors,

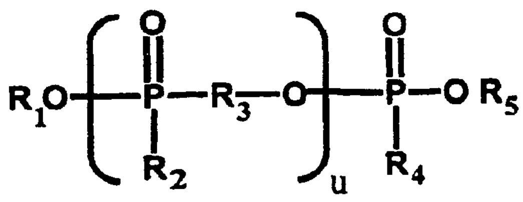

(I)

in which u denotes a chain length of from 1
$R_1$ and $R_5$ are identical or different and are a hydroxyl-containing radical of the general formula II

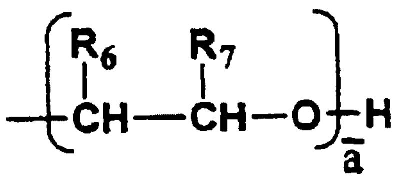

(II)

$R_2$ and $R_4$ are identical or different and are an alkyl, aryl or alkylaryl group having 1 to 12 carbon atoms and $R_3$ is a radical of the general formula III

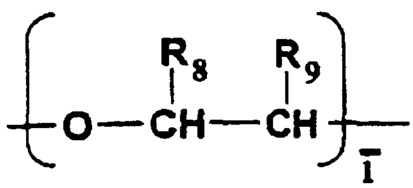

(III)

$\bar{a}$ denotes an average chain length of from 0 to 4

$\bar{i}$ denotes an average chain length of from 0 to 4

$R_6$, $R_7$, $R_8$ and $R_9$ are identical or different and are, independently of one another, H or an alkyl group having 1 to

6 carbon atoms.

**2.** The process as claimed in claim 1, wherein
u denotes a chain length of 1

$\bar{a}$ denotes an average chain length of from 1 to 2

$\bar{i}$ denotes an average chain length of from 1 to 2

$R_2$ and $R_4$ are identical or different and are, independently of one another, an alkyl group having 1 to 5 carbon atoms
$R_6$, $R_7$, $R_8$ and $R_9$ are identical or different and are, independently of one another, H or an alkyl group having 1 or 2 carbon atoms.

**3.** The process as claimed in claim 1 or 2, wherein the hydroxyalkyl phosphonates are diethylene glycol bis (hydroxyalkoxy) methanephosphonate and/or ethylene glycol bis(hydroxyalkoxy)ethane-phosphonate.

**4.** The process as claimed in one or more of claims 1 to 3, wherein the hydroxyalkyl phosphonates of the general formula I are compounds which are liquid at the processing temperature.

**5.** The process as claimed in one or more of claims 1 to 4, wherein the hydroxyalkyl phosphonates of the general formula I are isocyanate-reactive compounds.

**6.** The process as claimed in one or more of claims 1 to 5, wherein further core discoloration inhibitors and/or flame retardants known per se are employed.

**7.** The process as claimed in one or more of claims 1 to 6, wherein the hydroxyalkyl phosphonates of the general formula I are employed in an amount of from 0.01 to 50 parts, based on the resultant flexible polyurethane foam.

**8.** The process as claimed in one or more of claims 1 to 7, wherein the hydroxyalkyl phosphonates of the general formula I are employed in an amount of from 0.5 to 10 parts, based on the resultant flexible polyurethane foam.

**9.** The use of hydroxyalkyl phosphonates of the general formula I

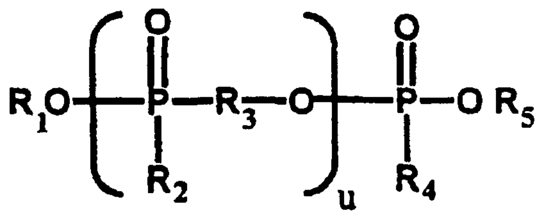

(I)

in which
u denotes a chain length of 1
$R_1$ and $R_5$ are identical or different and are a hydroxyl-containing radical of the general formula II

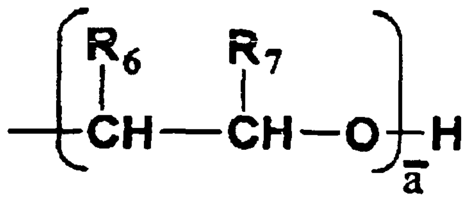

(II)

$R_2$ and $R_4$ are identical or different and are an alkyl, aryl or alkylaryl group having 1 to 12 carbon atoms
$R_3$ is a radical of the general formula III

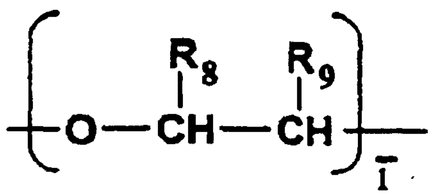

(III)

$\bar{a}$ denotes an average chain length of from 0 to 4

$\bar{i}$ denotes an average chain length of from 0 to 4

$R_6$, $R_7$, $R_8$ and $R_9$ are identical or different and are, independently of one another, H or an alkyl group having 1 to 6 carbon atoms,
as halogen-free flame retardants for the production of flame-resistant flexible polyurethane foams having a low susceptibility to core discoloration.

**10.** The use as claimed in claim 9, wherein
u denotes a chain length of 1

$\bar{a}$ denotes an average chain length of from 1 to 2

$\bar{i}$ denotes an average chain length of from 1 to 2

$R_2$ and $R_4$ are identical or different and are, independently of one another, an alkyl group having 1 to 5 carbon atoms
$R_6$, $R_7$, $R_8$ and $R_9$ are identical or different and are, independently of one another, H or an alkyl group having 1 or 2 carbon atoms.

**11.** The use as claimed in claim 9 or 10 wherein hydroxyalkyl phosphonates are diethylene glycol bis(hydroxyalkoxy)methanephosphonate and/or ethylene glycol bis(hydroxyalkoxy)ethanephosphonate.

**Revendications**

**1.** Procédé de fabrication de mousses souples de polyuréthanne ignifuges ayant une faible tendance au brunissement de coeur, par réaction de polyisocyanates organiques avec des composés ayant au moins deux atomes d'hydrogène réactifs vis-à-vis des isocyanates, et d'agents porogènes usuels, stabilisants, activateurs et/ou autres additifs et adjuvants usuels, **caractérisé en ce qu'**on utilise en tant qu'agents d'ignifugation non halogénés et en tant qu'inhibiteurs de brunissement de coeur des hydroxyalkylphosphonates de formule générale (I)

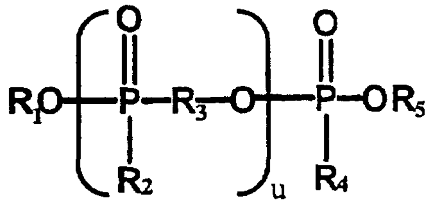

(I)

dans laquelle u est une longueur de chaîne 1,
$R_1$ et $R_5$ sont identiques ou différents et représentent chacun un radical hydroxylé de formule générale II

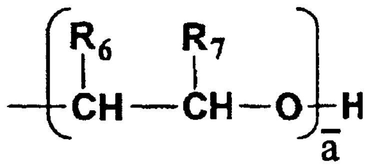

(II)

$R_2$ et $R_4$ sont identiques ou différents et représentent chacun un groupe alkyle, aryle ou alkylaryle ayant 1 à 12 atomes de carbone, et $R_3$ est un radical de formule générale III

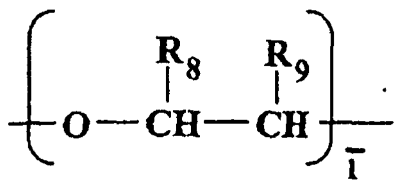

(III)

$\bar{a}$ est une longueur moyenne de chaîne de 0 à 4,

$\bar{i}$ est une longueur moyenne de chaîne de 0 à 4 et

$R_6$, $R_7$, $R_8$, $R_9$ sont identiques ou différents et représentent chacun indépendamment des autres H ou un groupe alkyle ayant de 1 à 6 atomes de carbone.

**2.** Procédé selon la revendication 1, **caractérisé en ce que**
u est une longueur de chaîne 1,

$\bar{a}$ est une longueur moyenne de chaîne de 1 à 2,

$\bar{i}$ est une longueur moyenne de chaîne de 1 à 2, et

$R_2$ et $R_4$ sont identiques ou différents et représentent chacun indépendamment de l'autre un groupe alkyle ayant 1 à 5 atomes de carbone,
$R_6$, $R_7$, $R_8$ et $R_9$ sont identiques ou différents et représentent chacun indépendamment des autres H ou un groupe alkyle ayant 1 ou 2 atomes de carbone.

**3.** Procédé selon la revendication 1 ou 2, **caractérisé en ce que**, pour ce qui concerne les hydroxyalkylphosphonates, il s'agit d'un bis(hydroxyalcoxy)méthanephosphonate de diéthylèneglycol et/ou d'un bis(hydroxyalcoxy)éthanephosphonate d'éthylèneglycol.

4. Procédé selon l'une ou plusieurs des revendications 1 à 3, **caractérisé en ce que**, pour ce qui concerne les hydroxyalkylphosphonates de formule générale I, il s'agit de composés liquides à la température de mise en oeuvre.

5. Procédé selon l'une ou plusieurs des revendications 1 à 4, **caractérisé en ce que**, pour ce qui concerne les hydroxyalkylphosphonates de formule générale I, il s'agit de composés réactifs vis-à-vis des isocyanates.

6. Procédé selon l'une ou plusieurs des revendications 1 à 5, **caractérisé en ce qu'**on y utilise d'autres inhibiteurs de brunissement de coeur et/ou agents d'ignifugation connus en soi.

7. Procédé selon l'une ou plusieurs des revendications 1 à 6, **caractérisé en ce que** les hydroxyalkylphosphonates de formule générale I sont utilisés en une quantité de 0,01 à 50 parties par rapport à la mousse souple de polyuréthanne obtenue.

8. Procédé selon l'une ou plusieurs des revendications 1 à 7, **caractérisé en ce que** les hydroxyalkylphosphonates de formule générale I sont utilisés en une quantité de 0,5 à 10 parties par rapport à la mousse souple de polyuréthanne obtenue.

9. Utilisation d'hydroxyalkylphosphonates de formule générale I

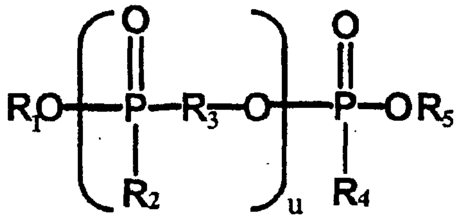

(I)

dans laquelle u est une longueur de chaîne 1,
$R_1$ et $R_5$ sont identiques ou différents et représentent chacun un radical hydroxylé de formule générale II

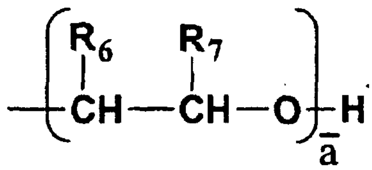

(II)

$R_2$ et $R_4$ sont identiques ou différents et représentent chacun un groupe alkyle, aryle ou alkylaryle ayant 1 à 12 atomes de carbone, et $R_3$ est un radical de formule générale III

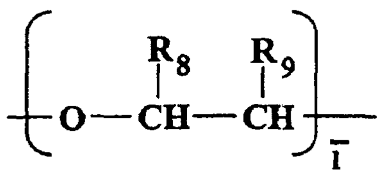

(III)

$\bar{a}$ est une longueur moyenne de chaîne de 0 à 4,

$\bar{i}$ est une longueur moyenne de chaîne de 0 à 4 et

$R_6$, $R_7$, $R_8$, $R_9$ sont identiques ou différents et représentent chacun indépendamment des autres H ou un groupe alkyle ayant de 1 à 6 atomes de carbone,
en tant qu'agents d'ignifugation non halogénés pour fabriquer des mousses souples de polyuréthanne ignifuges ayant une faible tendance au brunissement de coeur.

**10.** Utilisation selon la revendication 9, **caractérisée en ce que**
u est une longueur de chaîne 1,

$\bar{a}$ est une longueur moyenne de chaîne de 1 à 2,

$\bar{i}$ est une longueur moyenne de chaîne de 1 à 2, et

$R_2$ et $R_4$ sont identiques ou différents et représentent chacun indépendamment de l'autre un groupe alkyle ayant 1 à 5 atomes de carbone,
$R_6$, $R_7$, $R_8$ et $R_9$ sont identiques ou différents et représentent chacun indépendamment des autres H ou un groupe alkyle ayant 1 ou 2 atomes de carbone.

**11.** Utilisation selon la revendication 9 ou 10, **caractérisée en ce que**, pour ce qui concerne les hydroxyalkylphosphonates, il s'agit d'un bis(hydroxyalcoxy)-méthanephosphonate de diéthylèneglycol et/ou d'un bis(hydroxyalcoxy)éthanephosphonate d'éthylèneglycol.